Europäisches Patentamt

European Patent Office

Office européen des brevets

(11) Publication number: **0 491 355 A1**

# EUROPEAN PATENT APPLICATION

(21) Application number: **91121604.2**

(22) Date of filing: **17.12.91**

(51) Int. Cl.5: **B29C 67/14**, B29B 15/08

(30) Priority: **19.12.90 US 630245**

(43) Date of publication of application:
**24.06.92 Bulletin 92/26**

(84) Designated Contracting States:
**CH DE ES FR GB IT LI**

(71) Applicant: **HERCULES INCORPORATED**
**Hercules Plaza**
**Wilmington Delaware 19894-0001(US)**

(72) Inventor: **Johnson, John Allen**
**3159 S. 9100 W. Street**
**Magna, Utah 84044(US)**

(74) Representative: **Meyer-Roxlau, Reiner**
**Ferdinand, Dipl.-Ing. et al**
**Anwaltskanzlei Wey & Partner**
**Widenmeyerstrasse 49**
**W-8000 München 22(DE)**

(54) **Fiber placement compaction preheat system.**

(57) A compaction preheat system consists of an air heater (1) placed just prior to the compaction roller (6) of the fiber placement head. The amount of heat supplied to the composite is determined by a control computer. The controlling computer adjusts the amount of heat being put into the composite by scrutinizing the entire fiber placement process. The amount of preheat needed is determined by the speed of the fiber delivery, type of fiber being used, amount of consolidation desired, and actual temperature of fiber as measured, e.g., by infrared thermometry (4).

FIGURE 1

The present invention is related to composite structure manufacturing methods, and apparatus for practicing such methods.

Fiber placement systems generally consist of placing rovings or tows impregnated with a BMI, thermoplastic, or other thermosetting type resin as a single tow or entire band in a number of superimposed layers onto a mandrel to produce an irregular shaped article. In most cases, the fiber being placed lacks the ability to stick to the mandrel or to previously placed layers of material. A lack of adhesiveness or tackiness prohibits the medium from staying where it is positioned. Additionally, stiffness of the fiber band can result in voids in the finished part if it is not made more compliant by the addition of heat prior to densification by the compaction roller.

A lack of adhesiveness in the band during placement on mandrels which are not vertical, or which have concave sections, can cause band slippage. Band slippage occurs because of either gravity tugging on the band or the back tension in the fiber placement head. In concave areas, the process tends to pull the fiber off of the mandrel. Either condition is unsuitable to the fiber placement process.

Present fiber preheat methods consist of an operator holding a hot air gun which he directs on the fiber path just prior to the compaction point. Another method consists of infrared heat being applied. Both techniques suffer from a lack of responsiveness and control, the first especially as the operator becomes fatigued and inattentive. Lack of proper temperature control can cause part damage by localized resin curing or poor fiber consolidation.

An object of the present invention, therefore, is to provide a heat source to the point at which the fiber is being placed, so that the fiber being placed will stick to the underlying fiber.

An additional object of the present invention is to make the fiber and resin sufficiently soft and compliant such that good consolidation will take place in the part, i.e., no air bubbles or areas of bridging are produced. This entire process must be accomplished with the least possibility of heating the composite so greatly that it causes an exothermic reaction, or that it results in localized areas of cured resin.

In accordance with the foregoing objects, one or two electrically powered air heaters, as required, are positioned at the point where the fiber band is being placed. Variable amounts of compressed air are passed through the air heater, where it is heated to a precise temperature as required in the process. The temperature of the heated air is precisely measured by thermocouples in the heater and controlled by a computer and by solid state power switching devices.

The air heater is mounted directly to the delivery head with electrical and pneumatic connection being made by quick release connectors and disconnects to facilitate removal or replacement.

Process fiber temperature is monitored by an infrared sensor. Fiber speed is fed to the control system as a preconditioned signal proportional to the speed of the compaction roller.

It is contemplated that this invention is to utilize a computer running on an Intel 80386-25 microprocessor with process signals entering and leaving the computer through Metrabyte I/O boards. Operator interface is through a computer keyboard and monitor, which gives a constant graphical representation of the process.

The present invention includes redundant process monitoring which measures the temperature of the air leaving the air heater and the rate of air flow. Should these values exceed a predetermined limit, the process is shut down. Additional checks and balances are maintained by timing the application of heat to the fiber during times of slow or non-movement, as a function of the localized contours of the part being laid, e.g., to ensure that heat is not indiscriminately applied to the part being fiber-placed.

The present invention also includes variable transformer power supplies to preclude any more voltage being applied to the heater than is necessary. Operator safety from electrical shock is provided by ground fault circuit interrupters.

The objects of the present invention can be achieved by means of at least three different configurations: (1) a single resistive electric air heating element with microprocessor controlled single channel, closed loop control, thermocouple feedback or infrared thermometer feedback with on/off or proportional controls; (2) a single resistive electric air heating element with microprocessor controlled multi-channel, closed loop control, infrared sensor priority control with delivered air temperature secondary control; and (3) multiple resistive electric air heating element with microprocessor controlled multi-channel, closed loop control, delivery roller motion priority shutdown and delivered air temperature control, heating element power control by infrared sensor closed loop feedback.

In view of the foregoing, the present invention can be defined as including a compaction preheat system, and a method of use thereof, in conjunction with a fiber placement apparatus for placement of fiber upon a mandrel, the system including: (a) means for supplying heat to an area as the fiber placement apparatus applies fiber at least proximate to the area; (b) means for monitoring a plurality of parameters characteristic of the fiber placement apparatus; and (c) means for controlling an amount of heat supplied by the means for supplying heat as a function of monitored value of a predeterminate plurality of the plurality of parameters.

Specifically, the parameters being monitored include the temperature of the area being heated by the means for supplying heat. An infrared sensor is contemplated as a sensor for such monitoring.

According to a further feature of the invention, the means for controlling an amount of heat supplied by the means for supplying heat including means for controlling temperature and air flow rate.

For completion of a closed loop control, the temperature at the outlet of an air gun utilized for supplying the aforementioned heat can be monitored.

According to a particular feature of the invention, the means for controlling an amount of heat supplied by the means for supplying heat further include an safety interrupt device for terminating heat supplied to the area in the event that the heat supplied reaches a temperature above a predetermined value.

The mandrel of the placement system is adapted to rotate at a predeterminate speed, and the means for monitoring a plurality of parameters include means for monitoring the speed of the mandrel.

According to a further feature of the present invention, the means for controlling an amount of heat supplied by the means for supplying heat further include a computer for controlling the amount of heat supplied as a function of a computer model. A monitor and keyboard are linked to the computer for enable operator input and control of the system.

According to an additional feature of the invention, the means for controlling an amount of heat supplied by the means for supplying heat, further, as a function of composition of the fiber. Specifically, for use with resin-impregnated fiber, the temperature is maintained at a temperature below the melt temperature of the resin.

The above and additional objects, characteristics, and advantages of the present invention will become apparent in the following detailed description of preferred embodiments, with reference to the accompanying drawing which is presented as a non-limiting example, in which: FIG. 1 shows the relationship of the various components of the compaction preheat system; FIG. 2 is a schematic view showing the major components of the invention; and FIG. 3 illustrates a filament placement system, in a rear isometric view, in which the present invention could be utilized.

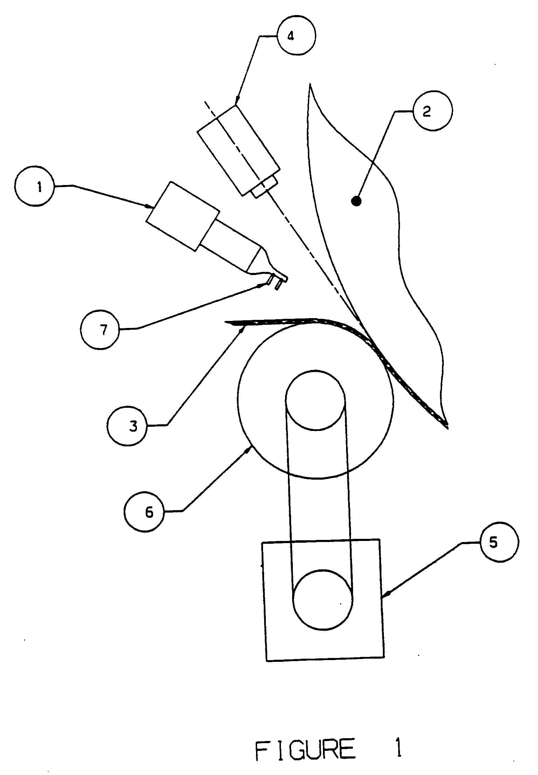

As shown in FIG. 1, the air heater 1 heats the resin-impregnated fiber on the mandrel 2, or may heat the band 3 being fiber-placed, or both. Temperature of the heated area is monitored by the infrared temperature sensor 4. Fiber speed is measured by the tachometer 5, as the tachometer is driven by the compaction roller 6. Additional process input is obtained by air temperature measuring thermocouples 7.

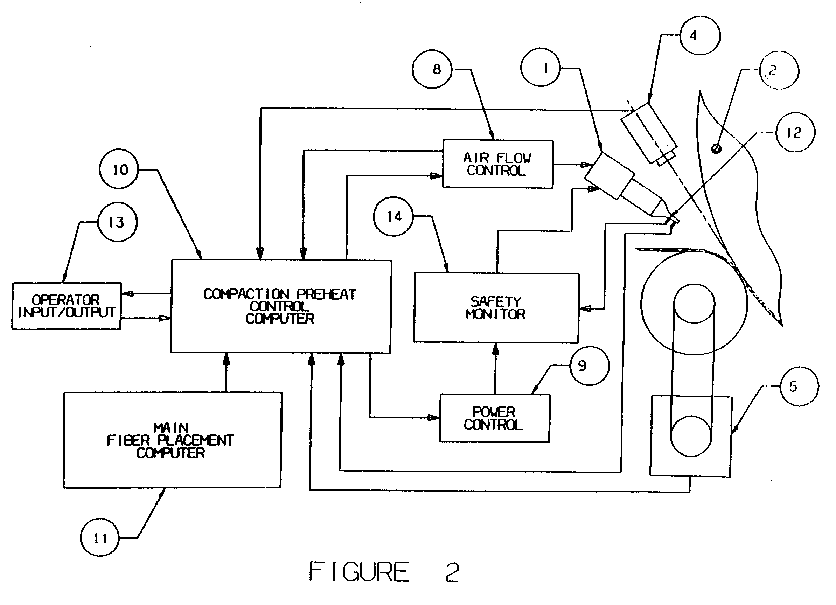

As depicted schematically in FIG. 2, air flow through the heater 1 is controlled by the air flow and control devices 8. Temperature is maintained by varying the amount of power with the power control and regulating system 9. The resin-impregnated fiber is to be heated to a temperature no greater than the melt temperature of the matrix resin

Closed loop control is achieved by monitoring the temperature of the composite on the mandrel 2 with the infrared temperature sensor 4. The temperature, along with fiber speed, as determined by the tachometer 5, are processed by the control computer 10. In addition to the above-mentioned parameters of fiber temperature and speed, the computer determines the amount of air flow and air temperature which is required by assessing requirements of the process as input from the main fiber placement machine control computer

Additional control is achieved by modeling the effect of heat on the composite resin. Excessive heat can cause areas of localized cure of in extreme cases, and an exothermic reaction can result. Conversely, insufficient heat to the fiber would not supply the required tackiness or compliance required to make a good part. During fiber placement on irregularly shaped mandrels, it is known to vary the speed of fiber placement, depending upon the particular application location of fiber placement on the mandrel. For example, the speed of fiber placement can be decreased as somewhat intricate turns or edges are traversed by the fiber delivery head. As the temperature of the composite is a function of the difference in temperature between the air source and fiber being heated, as well as the length of time the temperature is applied, modeling is necessary to keep fiber temperature within required limits as the speed of the fiber varies.

That is, the amount of heat applied can be controlled by means of the preheat system of the invention via a computer model, as a function of the shape of the mandrel, e.g., and as a function of the composition of the fiber tow being laid. The temperature of the heated air and the quantity of air per unit of time produced at the air gun 1 can be selectively increased and decreased and/or the duration of the heated air, e.g., can be selectively controlled throughout the laying of fiber upon the mandrel during the formation of the article.

Redundant regulation is accomplished by monitoring the temperature of the air leaving the heater with a thermocouple 12. Should the temperature rise too high for too long, as predetermined by operator experience, the process will be interrupted by a separate safety monitoring system 14.

Operator input and control is accomplished through a monitor and keyboard 13.

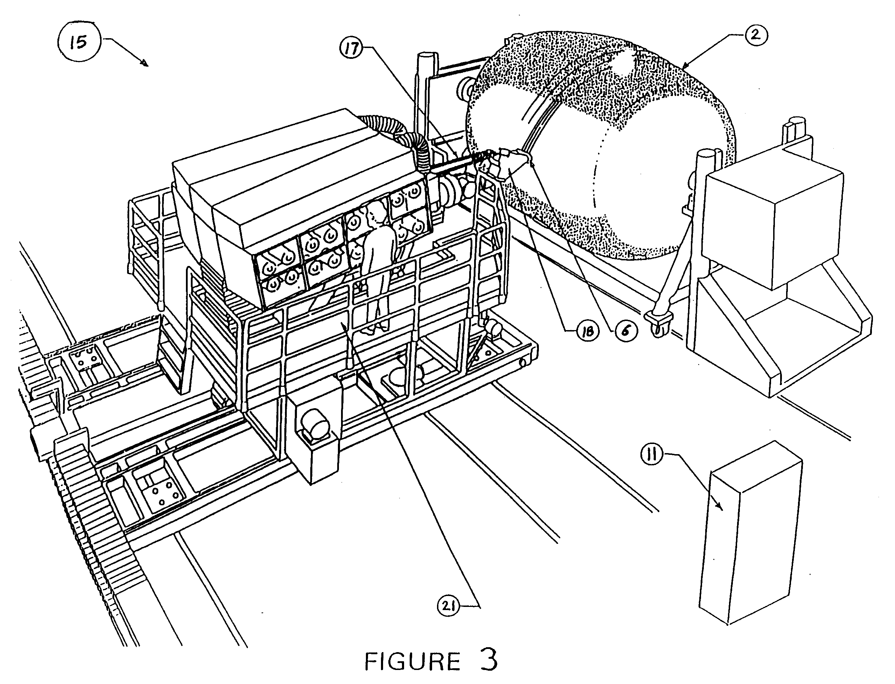

FIG. 3 illustrates, in perspective, a filament placement system 15 in which the preheat system of the present invention could be utilized. Individual rovings or tows 17 are directed to the delivery head 18, which is mounted onto a manipulator, and emerge at the delivery, or compaction, roller 6. The compaction roller applies the tows, formed into the band 3, onto the rotating mandrel 2. The air heater 1 can be attached to the delivery head 18, if desired.

The fiber placement machine 21 includes a creel assembly for maintaining individual reels upon which the individual tows are wound, from which they are directed to the delivery head. Operation of the machine 21, including the delivery head 18, is controlled by the computer 11.

Finally, although the invention has been described with reference of particular means, materials and embodiments, it is to be understood that the invention is not limited to the particulars disclosed and extends to all equivalents within the scope of the claims.

## Claims

1. A compaction preheat system adapted for use with a fiber placement apparatus for placement of fiber upon a mandrel, said preheat system comprising: (a) means for supplying heat to an area as the fiber placement apparatus applies fiber at least proximate to said area; (b) means for monitoring a plurality of parameters characteristic of said fiber placement apparatus; and (c) means for controlling an amount of heat supplied by said means for supplying heat as a function of monitored value of a predeterminate plurality of said plurality of parameters.

2. The system of claim 1, said means for monitoring a plurality of parameters comprising means for monitoring a temperature of said area being heated by said means for supplying heat.

3. The system of claim 2, said means for monitoring a temperature comprising an infrared temperature sensor.

4. The system of claim 1, said means for supplying heat comprising at least one air gun having an air outlet, said means for monitoring a plurality of parameters comprising means for monitoring a temperature of said outlet of said air gun.

5. The system of claim 4, said means for controlling an amount of heat supplied by said means for supplying heat further comprising an safety interrupt device for terminating heat supplied to said area in the event that said heat supplied reaches a temperature above a predetermined value.

6. The system of claim 1, the mandrel being adapted to rotate at a predeterminate speed, said means for monitoring a plurality of parameters comprising means for monitoring the speed of said mandrel.

7. The system of claim 1, said means for controlling an amount of heat supplied by said means for supplying heat further comprising a computer for controlling the amount of heat supplied as a function of a computer model.

8. The system of claim 1, said means for controlling an amount of heat supplied by said means for supplying heat further comprising a computer and a monitor and keyboard linked to said computer for operator input and control of said system.

9. The system of claim 1, said means for controlling an amount of heat supplied by said means for supplying heat, further, as a function of composition of said fiber.

10. The system of claim 1, said means for controlling an amount of heat supplied by said means for supplying heat comprising means for controlling temperature and air flow rate.

11. A preheat method adapted for use with a fiber placement apparatus for placement of fiber upon a mandrel, said preheat method comprising the steps of: (a) supplying heat to an area as the fiber placement apparatus applies fiber at least proximate to said area; (b) monitoring a plurality of parameters characteristic of said fiber placement apparatus; and (c) controlling an amount of heat supplied in said step of supplying heat as a function of monitored value of a predeterminate plurality of said plurality of parameters.

12. The method of claim 11, said step of monitoring a plurality of parameters comprising monitoring a temperature of said area being heated by said means for supplying heat.

**13.** The method of claim 12, said step of monitoring a temperature comprising monitoring a temperature by means of an infrared temperature sensor.

**14.** The method of claim 11, said step of supply heat being performed by an air gun, and said step of monitoring a plurality of parameters comprising monitoring a temperature at an outlet of said air gun.

**15.** The method of claim 14, said step of controlling an amount of heat supplied by said means for supplying heat further comprising the step of for terminating heat supplied to said area in the event that said heat supplied reaches a temperature above a predetermined value.

**16.** The method of claim 11, the mandrel being adapted to rotate at a predeterminate speed, said step of monitoring a plurality of parameters comprising monitoring the speed of said mandrel.

**17.** The method of claim 11, said step of controlling an amount of heat supplied in said step of supplying heat being performed by a computer for controlling the amount of heat supplied as a function of a computer model.

**18.** The method of claim 11, said step of controlling an amount of heat supplied in said step of supplying heat comprising controlling temperature and air flow rate.

**19.** The method of claim 11, said step of controlling an amount of heat supplied in said step of supplying heat as a function of composition of said fiber.

**20.** The method of claim 19, said composition of said fiber being a resin-impregnated fiber, said resin having a predeterminate melt temperature, and said step of controlling an amount of heat supplied in said step of supplying heat comprising maintaining said amount of heat at a temperature below the melt temperature of said resin.

EP 0 491 355 A1

FIGURE 1

6

FIGURE 2

EP 0 491 355 A1

FIGURE 3

European Patent Office

# EUROPEAN SEARCH REPORT

Application Number

EP 91 12 1604

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | PLASTVERARBEITER<br>vol. 37, no. 8, August 1986, SPEYER, W. GERMANY<br>pages 32 - 42;<br>KIRBERG: 'Höhere Qualität bei gewickelten Teilen durch Automatisieren'<br>* page 34, column 3, line 48 - page 36, column 1, line 7; figure 2 *<br>--- | 1-20 | B29C67/14<br>B29B15/08 |
| Y | US-A-3 574 040 (CHITWOOD ET AL.)<br>* column 14, line 28 - line 33 *<br>* column 7, line 63 - line 66 *<br>--- | 1-20 | |
| A | WO-A-8 400 351 (BOEING)<br>* page 15, line 24 - line 32 *<br>--- | 1-20 | |
| A | DE-A-3 226 290 (MESSERSCHMITT-BÖLKOW BLOHM)<br>* page 8, line 21 - line 28 *<br>--- | 1-20 | |
| A | EP-A-0 198 744 (AEROSPATIALE)<br>* page 8, line 25 - line 31; claim 8 *<br>--- | 1-20 | TECHNICAL FIELDS SEARCHED (Int. Cl.5) |
| A | EP-A-0 167 377 (E.I. DUPUNT DE NEMOURS)<br>* page 1, line 24 - line 31 *<br>----- | 1-20 | B29C<br>B29B |

The present search report has been drawn up for all claims

| Place of search | Date of completion of the search | Examiner |
|---|---|---|
| THE HAGUE | 02 MARCH 1992 | VAN WALLENE A.M. |

EPO FORM 1503 03.82 (P0401)